(19) Europäisches Patentamt

European Patent Office

Office européen des brevets

(11) Veröffentlichungsnummer: **0 521 855 B1**

(12) **EUROPÄISCHE PATENTSCHRIFT**

(45) Veröffentlichungstag der Patentschrift: **17.08.94**

(21) Anmeldenummer: **91902173.3**

(22) Anmeldetag: **13.12.90**

(86) Internationale Anmeldenummer:
**PCT/EP90/02181**

(87) Internationale Veröffentlichungsnummer:
**WO 91/14925 (03.10.91 91/23)**

(51) Int. Cl.⁵: $G01F\ 1/66$

(54) **VERBESSERUNG FÜR EINEN ULTRASCHALL-GAS-/FLÜSSIGKEITS-DURCHFLUSSMESSER.**

(30) Priorität: **29.03.90 DE 4010148**

(43) Veröffentlichungstag der Anmeldung:
**13.01.93 Patentblatt 93/02**

(45) Bekanntmachung des Hinweises auf die
Patenterteilung:
**17.08.94 Patentblatt 94/33**

(84) Benannte Vertragsstaaten:
**AT BE CH DE DK ES FR GB GR IT LI LU NL SE**

(56) Entgegenhaltungen:
**GB-A- 776 526**
**GB-A- 2 146 122**

**Siemens Forschungs- und Entwicklungsberichte, volume 15, No. 3, 1986, Spring-Verlag, (Berlin, DE), A.V. Jena: "Ultraschallsensor für hochauflösende Durchflussmessung", pages 126-134 see page 132; figure 11**

**Patent Abstracts of Japan, volume 3, No. 155 (E-160), 19 December 1979, & JP,A, 54135564**

**Technisches Messen, volume 56, No. 3, March 1989, R. Oldenbourg Verlag, (München, DE), K.S. Mylvaganam: "Ultraschall-Durchflussmessung strömender Gase unter niedrigem Druck für einen breiten Messbereich", pages 112-115 see page 114; figure 4**

(73) Patentinhaber: **SIEMENS AKTIENGESELL-SCHAFT**
**Wittelsbacherplatz 2**
**D-80333 München (DE)**

(72) Erfinder: **RUSSWURM, Winfried**
**Dechbettenerstrasse 19a**
**D-8400 Regensburg (DE)**
Erfinder: **VON JENA, Alexander**
**Oskar-von-Miller-Ring 29**
**D-8000 München 2 (DE)**

EP 0 521 855 B1

**Beschreibung**

Die vorliegende Erfindung bezieht sich auf eine Verbesserung an einem Ultraschall-Gas-/Flüssigkeits-Durchflußmesser wie er in verschiedenen Ausführungsformen in den älteren Patentanmeldungen DE-A 39 41 546 und DE-A 39 41 545 und DE-A-39 41 544 ausführlich beschrieben ist. Den Durchflußmessern der vorgenannten älteren Patentanmeldungen gemeinsam ist, daß das vom Gas bzw. von der Flüssigkeit durchströmte Meßrohr im Bereich der Ultraschall-Durchflußmessung rechteckförmigen Querschnitt hat. D.h., daß dieses Meßrohr planflächige Seitenwände besitzt. Ebenfalls allen diesen Durchflußmessern gemeinsam ist, daß der zur Durchflußmessung verwendete Ultraschall einen W-förmigen Weg mit entsprechend drei Reflektionen des Ultraschalls an solchen Wänden des Meßrohres aufweist. Die Bezeichnung "W"-förmig verweist auf das Prinzip der Wegführung des Ultraschalls hin. Es können auch Ultraschallwege mit noch mehr aufeinanderfolgenden Reflektionen zwischen dem den Ultraschall erzeugenden Sendewandler und dem den Ultraschall empfangenden Empfangswandler vorgesehen sein. Die Anbringung der notwendigerweise vorzusehenden Empfangs-/Sendewandler und das Erfordernis diese Wandler am Meßrohr so anzubringen, daß keine nennenswerte Beeinträchtigung der Strömung des Gases bzw. der Flüssigkeit im Meßrohr auftritt, zwingt dazu, den Ultraschall in Schrägrichtung in das Meßvolumen es Meßrohres hineinzusenden und in entsprechender Schrägrichtung vom Empfangswandler wieder aufzunehmen.

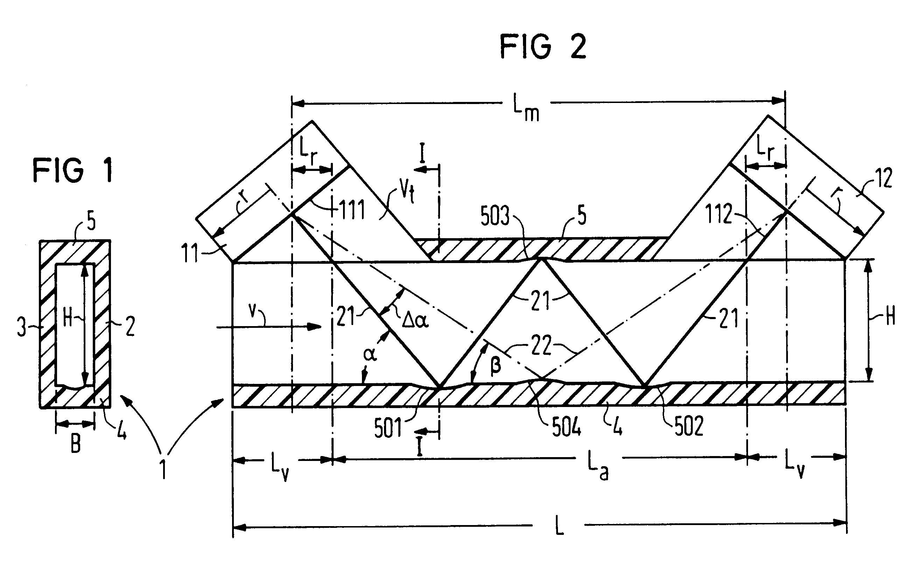

Die obengenannte Patentanmeldung DE-A-39 41 546 betrifft einen Durchflußmesser mit solch rechteckförmigem Querschnitt, daß die Höhe H zur Breite B der Querschnittsfläche der Strömung größer als 2:1 bis 15:1 beträgt. Mit einer solchen Bemessung der Seitenrelation der Wände des Meßrohres läßt sich erreichen, daß der von dem Gas oder der Flüssigkeit durchströmte Meßrohr-Querschnitt vom Ultraschall homogen durchstrahlt wird, nämlich wenn die Sende-/Empfangswandler an dem Meßrohr an den Schmalselten mit der Breite B angebracht sind und die Höhenabmessung des Querschnittes eine Komponente des Weges des Ultraschalls im Meßrohr ist. Weitere diesbezügliche Einzelheiten der geometrischen Anordnung gehen aus der Querschnittsdarstellung der Fig. 1 und der Seitenansicht der Fig. 2 hervor.

Die Fig. 1 und 2 zeigen zusammengenommen die Ansicht in Axialrichtung der Strömung (Fig. 1) und die Seitenansicht des in Längsrichtung aufgeschnittenen Rohres (Fig. 2). Mit H und B sind die oben definierten Abmessungen für die Höhe und Breite des Rechteckrohres 1 angegeben. Mit 2 und 3 sind die Seitenwände und mit 4 und 5 sind die untere Seitenwand und die obere Seitenwand bezeichnet. Dieselben Bezugzeichen zeigt die Fig. 2. In die obere Seitenwand 5 sind die Wandler 11 und 12 eingesetzt, und zwar mit ihrer Sende- bzw. Empfangsfläche 111, 112 schräg gerichtet zur Seitenwand 5 (wie dies die Fig. 2 zeigt). Im Winkel Alpha (=a) ist der W-förmigen Ultraschallweg 21 gerichtet, nämlich bezogen auf die Seitenwände 4 und 5. Die Flächen 111 und 112 sind so gerichtet, daß der Strahlweg 21 diese Flächen senkrecht trifft.

Es ist aber prinzipiell nicht zu vermeiden, daß ein Anteil akustischer Energie auch in einem solchen Winkel von der Fläche 111 bzw. 112 abgestrahlt bzw. von diesen Flächen empfangen wird, der zu einem V-förmigen Weg 22 im Rohrinneren des Rohres 1 führt. Der V-förmige Weg mit dem Winkel Beta (= b) hat eine andere Laufzeit als der gewünschte W-förmige Weg, der vorteilhafterweise eine größere akustische Weglänge im Rohr 1 hat, als dies für den V-förmigen Weg der Fall ist.

In Fig. 2 ist die Gesamtlänge des Durchflußmessers mit L angegeben. Die übrigen Zeichnungen in der Fig. 2 beziehen sich auf die nachfolgend gegebene physikalische Erläuterung zur Erfindung.

Für einen den Fig. 1 und 2 entsprechenden erfindungsgemäßen Durchflußmesser mit dreifacher Schallreflexion an unterer und oberer Seitenwand beträgt die wirksame Strömungsgeschwindigkeit $v_{eff}$

$$v_{eff} = v^* \cos a \qquad (1)$$

mit Alpha als dem Winkel zwischen der axialen Strömungsrichtung und der Abstrahl- bzw. Empfangsrichtung der Wandler 11 und 12 und mit $v^*$ als über den Schallweg gemittelter Strömungsgeschwindigkeit. Mit dem zeitlich differentiellen Volumenstrom $dV/dt$ hängt $v^*$ zusammen:

$$dV/dT = v^* \cdot F \qquad (2)$$

mit F gleich der Querschnittsfläche H x B. Die Länge $L_s$ des Schallwegs im bewegten Medium ergibt sich zu

$$L_s = \frac{(N+1) \cdot H}{\sin a} = \frac{4H}{\sin a} \quad \text{für } N = 3 \text{ ("W-Anordnung)} \quad (3)$$

mit N = Anzahl der Reflexionen. Mit der Länge der Meßstrecke $L_a$ zwischen den Durchstoßpunkten des Ultraschalls durch die (gedachte) obere Seitenwand (siehe auch die Fig. 2) zum strömenden Medium

$$L_a = (N+1)\,H \cot a = 4H \cot a \text{ für } N = 3 \text{ ("W"-Anordnung)} \quad (4)$$

erfolgt für die erzielbare Laufzeitdifferenz

$$\text{Delta } t = \frac{2\,L_s \cdot v_{eff}}{c^2} = \frac{2L_a}{c^2}v^* = \frac{2\,(N+1) \cdot H \cdot v^* \cdot \cot a}{c^2} \quad (5)$$

Vom Rohreinlaß bis zum Durchstoßpunkt (Fig. 2) befindet sich zwar strömendes Medium, das durch den Ultraschallstrahl aber nicht erfaßt wird. Diese Vorlauflänge $L_v$ hängt vom Einstrahlwinkel Alpha und vom Radius r des Wandlers ohne Berücksichtigung der Wandlergehäusewandstärke ab:

$$L_v = \frac{r}{\sin a} \quad (6)$$

Der Schallweg $L_w$ innerhalb der Wandlertaschen ist

$$L_w = r \cot a \quad (7)$$

Dieser Schallweg verursacht zusätzliche Signaldämpfung und wird deshalb möglichst klein gehalten. Der nicht nutzbare Anteil $2L_v/L$ an der Gesamtlänge $L = L_a + 2L_v$ errechnet sich zu

$$\frac{L_w}{L_a} = \frac{r}{4H} \text{ bzw. } \frac{L_v}{L_a} = \frac{L_v}{L-2L_v} = \frac{r}{4H \cos a} \text{ bzw.}$$

$$\frac{2L_v}{L} = \frac{r}{2H \cos a + r} \quad (8)$$

Dieser Anteil hängt vom Einstrahlwinkel Alpha (= a), vom Wandlerradius r und von der Höhe H des Rohrquerschnittes ab. Je höher das Rohr und je kleiner der Wandlerradius r, desto größer ist der nutzbare Anteil. Der nutzbare Anteil wird mit kleinerem Winkel Alpha größer (bis sich mit Alpha = 0 der Grenzfall des geradlinig durchschallten Meßrohrs ohne Reflexionen (keine "W"-Anordnung mehr) ergibt). Das ebenfalls zur Messung nicht nutzbare Volumen der Wandlertasche

$$V_t = r^3 \cdot \pi \cdot \cot a \quad (9)$$

wird bei vorgegebenem r mit größerem Alpha kleiner. Damit wird der Einfluß der Querschnittserweiterung und -verengung auf Turbulenzen und Druckverlust geringer.

Bei der "W"-Anordnung wird als überlagertes Störsignal der Beitrag des parasitären "V"-Schallweges 22 beobachtet, der im Winkel Delta a zur Normalen der Wandlerfläche 111, 112 ("W"-Schallweg) abgestrahlt wird und im Winkel Beta einmal (N = 1) reflektiert wird.

Eine lokale Separation der Schallwege läßt sich erreichen.

Es gilt die Beziehung Delta a = a-b. Für beide Schallwege konstant ist der Abstand der Wandlermittelpunkte $L_m$. Für den "W"-Schallweg setzt sich dieser zusammen aus $L_m = L_a + 2L_r$ (Fig. 2). Mit der Beziehung

EP 0 521 855 B1

$$L_r = r \cot a \cos a \qquad (10)$$

und aus (4) ergibt sich für den Winkel Delta a

$$\text{Delta } a = a - \arctan\left(\left(1 - \frac{H}{r \cos a + 2H}\right)\tan a\right) \qquad (11)$$

Das bedeutet, daß bei $a \neq 0°$ und $\neq 90°$ ein größeres Delta a durch ein kleineres r und ein größeres a erreicht wird. Bei r verschieden von 0 und a fest kann ein größeres Delta a noch über die Höhe H erreicht werden. Für r sehr viel kleiner als H bzw. r = 0 kann (11) einfacher durch

$$\text{Delta } a = a - \arctan\left(\frac{\tan a}{2}\right) \qquad (12)$$

ausgedrückt werden. Delta a ist also von der Höhe H unabhängig. Hier liefert die Reihenentwicklung für arctan(x) und tan(x) die Näherungformel

$$\text{Delta } a = \frac{a}{2} - \frac{a^3}{8} \text{ (im Bogenmaß)} \qquad (13)$$

Ein großes Delta a bedeutet eine gute Unterdrückung der "V"-Signalamplitude Deshalb sollte auch der Einstrahlwinkel so groß wie möglich gemacht werden und r sehr viel kleiner als H erfüllt sein. Der Abstand der Auftreffpunkte

$$L_d = L_a/4 = H \cot a \qquad (14)$$

soll mindestens $L_d$ größer $2L_v$ sein, d.h. $L_a$ größer $8L_v$, um die Koinzidenz beider Strahlwege so gering wie möglich zu halten und die Reduzierung der "V"-Amplitude durch reflexionsdämpfende Elemente zu ermöglichen. Da meist $L_a$ fest vorgegeben ist, ist auf eine entsprechende Dimensionierung von $L_v$ zu achten.

Auch eine zeitliche Separation der Schallwege läßt sich erreichen.

Die Länge des Schallweges ist für r = 0 durch $L_s$ beschreibbar, der Schallweg für den "V"-Pfad durch $L'_s$ nach (3) und (12). Die Weglängendifferenz $dL = L_s - L'_s$ ist für den einfachen Fall r = 0 bzw. r sehr viel kleiner als H beschreibbar durch

$$dL = H \frac{4 - 2(3\cos^2 a + 1)^{1/2}}{\sin a} \qquad (15)$$

Mit den Beziehungen $t_{auf} = L_s/(c - v_{eff})$ für "stromauf" und $t_{ab} = L_s/(c + v_{eff})$ für "stromab" für die strömungsabhängigen Laufzeiten läßt sich die Zeitdifferenz $t_d$ zwischen dem Eintreffen des "V"- und "W"-Signals darstellen als

$$t_{d(auf)} = \frac{dL}{(c - v_{eff})}$$
$$\qquad (16)$$
$$t_d(ab) = \frac{dL}{(c + v_{eff})}$$

4

Je größer $t_d$ ist, desto besser ist das "V"-Signal vom "W"-Signal zeitlich separiert, d.h. Auswertefehler durch Überlagerungseffekte werden verringert (Zeitmultiplex). Es ist zu beachten, daß bei Strömung stromaufwärts die Zeit $t_d$ zunimmt und stromabwärts abnimmt, also auch die zeitliche Separierbarkeit abnimmt. dL sollte deshalb so groß gemacht werden, daß bei Maximalströmung beide Signalanteile noch genügend zeitlich separiert sind. Größeres a, d.h. steilere Einstrahlung und größere Höhe H vergrößern dL.

Eine oben erwähnte Randbedingung ist der zulässige Druckverlust Delta p, der von der Meßrohrgeometrie wie folgt abhängt:

$$\text{Delta } p \text{ prop } v^{*2} \cdot L \cdot \frac{U}{F} \text{ prop } \left(\frac{dV}{dt}\right)^2 \cdot L \cdot \frac{U}{F^2} \qquad (17)$$

mit L = Länge des Meßrohres und U Umfang der durch F beschriebenen Querschnittsfläche. Dies bedeutet, daß minimaler Druckabfall bei quadratischer Meßrohrgestaltung eintritt.

Beim Design eines Ultraschallmeßrohres nach der "W"-Anordnung ist im allgemeinen die maximale Meßrohrlänge $L_a$, der maximale Volumendurchsatz dV/dt, der maximale Druckabfall Delta p bei Verwendung eines bestimmten Mediums und die maximale Einbauhöhe H vorgegeben. Zu erreichen ist ein möglichst großes Delta t bei möglichst geringem Störeinfluß. Aus diesem maximalen effektiven Wandlerabstand $L_a$ ( = Abstand der beiden Durchstoßpunkte des Wandlerstrahls an der inneren Deckenfläche) und der maximalen Einbauhöhe $H_{max}$ kann der Einstrahlwinkel bestimmt werden:

$$\tan a = \frac{4 H max}{L_a} \qquad (18)$$

Die Querschnittsfläche bzw. die Breite B des Meßrohres wird bestimmt durch den Druckverlust. Sie wird in einer einfachen experimentellen Prozedur so weit verändert, bis bei Maximalfluß der maximale Druckverlust erreicht ist. Die sich daraus ergebende Querschnittsfläche bestimmt die erzielbare Laufzeitdifferenz Delta t:

$$\text{Delta } t = \frac{2 L_a \cdot dV/dt}{H_{max} \cdot B \cdot c^2} \qquad (19)$$

Aus (18) und (19) ergibt sich für das Verhältnis aus Höhe und Breite des Meßrohres:

$$\frac{H}{B} = \frac{F \cdot \tan^2 a \cdot c^4}{64 (dV/dt)^2} \cdot \text{Delta } t^2 = \frac{L_a^2 \tan^2 a}{16 F} \qquad (20)$$

Bei einem langgestreckten Rohr ($L_a$ größer H, $L_a$ größer B) wird sich H/B größer/gleich 2 einstellen. Das bedeutet ein Meßrohr mit deutlich nichtquadratischem Querschnitt bis hin zu einem extremen Verhältnis der Kantenlängen.

Zusammengefaßt ergibt sich somit für r = konstant und dem Winkel Alpha ( = a) verschieden von 0° und 90°, d.h. Strahlweg mit Reflexionen, und N = 3, ergeben sich für die Wahl des

Einstrahlwinkels a folgende Kriterien:

Eine gute, relative Ausnutzung der Meßrohrlänge Gl. 8 kann durch ein möglichst kleinen Winkel Alpha ( = a) erzielt werden. Ein kleines Volumen der Wandlertaschen (Gl. 9), kurzer Schallweg in den Wandlertaschen (Gl. 7), großer Störabstandswinkel (Gl.11, Gl.12, Gl. 13) eine gute absolute Ausnutzung der Meßrohrlänge (Gl. 6) und eine gute zeitliche Separation der Schallwege (Gl. 15, Gl. 16) kann über einen wiederum möglichst großen Winkel a erreicht werden. Da der Störabstand, d.h. die Separation der Schallwege, die Vermeidung von Turbulenzen und eine optimale absolute Ausnutzung der Meßrohrlänge entscheidend für die Qualität der Messung sind, sollte in der Praxis durch ein möglichst großes a (z.B. a größer/gleich 35°) gewählt werden. Prinzipiell ist a bei vorgegebenem $L_a$ nach Gl. 18 nur durch die nach den Einbaumaßen des Rohres begrenzte Höhe H beschränkt. Da sich über H jedoch wichtige Größen (siehe oben) optimieren lassen, sollte H (im Verhältnis zur Breite B) so groß wie möglich gemacht werden. Allerdings bedeutet ein großes H zusätzliche Signaldämpfung durch lange Schallwege $L_s$, die jedoch durch genügend hohen Schallpegel kompensiert werden kann. Hohe Dämpfung tritt bei z. B. Methan und Methangemischen (mit z. B. Wasserstoff, Kohlendioxid...) auf.

Praktisches Zahlenbeispiel:

Meßrohrlänge $L_a$ = 150 mm, Druckabfall Delta p = 2 mbar (1 mbar = $10^2 N/m^2$), maximaler Volumenstrom dV/dt = 0,00167 $m^3$/s, Medium Luft (Schallgeschwindigkeit c = 340 m/s) bei Raumtemperatur, r = 5 mm. Experimentell erlaubt der Druckabfall die Querschnittsfläche F = 1,2 $cm^2$. Die maximale Einbauhöhe beträgt H = 31,5 mm. Damit wird der Einstrahlwinkel a = 40° und die Breite B = 3,8 mm. Das ergibt für das Verhältnis H/B den Wert 8,25. Die nutzbare Laufzeitdifferenz wird Delta t = 36 $\mu$s betragen. Weitere Größen: Störabstandswinkel (mit Gl. 11) Delta = 16,1°, $L_v$ = 7,8 mm, L 165,5 mm, $2L_v$/L = 0,094, d.h. 90,6 % der Meßrohrlänge werden genutzt. Das Volumen des Meßrohrs beträgt V = 19,9 $cm^3$, das Volumen der Wandlertaschen $V_t$ = 2*0,47 $cm^3$. Da $8L_v$ = 62 mm kleiner $L_a$ = 150 mm ist, ergibt sich eine gute lokale Selektierbarkeit der Schallwege. Die Größe dL wird zu 33,2 mm bestimmt. Damit trifft bei nichtbewegtem Medium das "V"-Signal ca. 98 $\mu$s vor dem "W"-Signal ein.

Wie sich aus dem Zahlenbeispiel erkennen läßt, ergibt sich ein extremes Verhältnis der Kantenlängen. Es wird aber noch ein weiterer Vorteil sichtbar: Bei quadratischem Querschnitt gleicher Fläche wäre H = B = 11 mm und damit die den Wandlern zugewandte Seite breiter als der eigentliche Wandler. Dies hätte eine inhomogene Durchschallung des Meßraumes zur Folge mit den daraus entstehenden gravierenden Meßfehlern. Bei einem Verhältnis H/B größer 2 wird die den Wandlern zugewandte Seite schmaler als der Wandler sein, und damit eine homogene Durchschallung ermöglicht. Ein Meßrohrquerschnitt mit extremem Kantenverhältnis kann auch aufgrund seiner Strömungsrichtereigenschaft in der Lage sein, an den Strömungseinläßen oder an den Wandlertaschen entstandene oder stromaufwärts entstandene, ins Meßrohr verschleppte Turbulenzen zu minimieren und damit einen weiteren Beitrag zur Meßgenauigkeit. Reproduzierbarkeit und Signalstabilität des Ultraschall-Meßverfahrens beitragen.

Mit einem erfindungsgemäß mit rechteckförmigen Querschnitt bemessenen Meßrohr 1 und mit der Wandleranordnung und -bemessung für homogene Durchstrahlung lassen sich zuverlässig Durchflußmessungen für den Bereich 5 ltr/h bis 30 cbm/h durchführen. Z.B. ist dafür eine Bemessung H:B mit 30 mm zu 5 bis 6 mm passend. Bei maximaler Durchflußmenge kann der Druckabfall bis 25 mbar ($25.10^2 N/m^2$) ansteigen. Mit elektronischer Nachkorrektur läßt sich ein solcher Durchflußmesser von 30 cbm/h bis sogar herab zu 1 ltr/h als genaues Meßgerät benutzen.

Die weitere obengenannte Patentanmeldung P 39 41 545.7 beschreibt einen einschlägigen Durchflußmesser, bei dem eine Variation gegenüber dem Durchflußmesser der oben ersten genannten Patentanmeldung angewendet wird, nämlich den Ultraschall eines solchen W-förmigen Weges zu nutzen, dessen Aussendewege am Sendewandler und dessen Empfangswinkel am Empfangswandler ein von 90° verschiedener Winkel zur Sende-/ Empfangsfläche 111, 112 ist. Diese Abweichung vom 90°-Winkel kann durch vergrößerten oder verkleinerten Abstand der Wandler 11, 12 oder durch absichtliche Winkel-Fehlorientierung der Anbringung dieser Wandler bewirkt sein. Bei diesen Ausführungen wird der Umstand genutzt, daß die Ultraschallstrahlung in ihrer Intensität abhängig vom Winkel zur sendenden bzw. empfangenden Fläche des Wandlers ist. Diese Maßnahme bewirkt, daß auf anderem als auf dem W-förmigem Wege zwischen Sendewandler und Empfangswandler übertragener Ultraschall, z.B. auf V-förmigem Wege 22 übertragener Schall in seiner Intensität relativ geschwächt ist. Diese Maßnahmen dienen dazu das Nutzsignal gegenüber dem unerwünschten parasitären Signal hervorzuheben.

Bezüglich weiterer Einzelheiten zu dieser Ausführungsform sei auf die Beschreibung dieser Anmeldung DE-A-39 41 545.7 hingewiesen.

Beim Durchflußmesser der weiteren obengenannten Patentanmeldung DE-A-39 41 544.9 ist der Umstand nutzbar gemacht, daß in der Differenz Ultraschallwellen gegeneinander zur Auslöschung gebracht werden können. Dem Querschnitt des Meßrohres, zwar am Ort der Reflektion des schon erwähnten parasitären V-förmigen Ultraschall-Strahlweges ist an der Innenseite des Meßrohres eine solche Stufe angebracht, die dazu führt, daß ein Anteil dieser parasitären Strahlung des V-förmigen Weges mit einer Phase reflektiert wird, die entgegengesetzt der Phase der Reflektion des anderen Anteils dieser Strahlung ist. Ohne Schwierigkeiten läßt sich damit eine rechtliche Schwächung des Signals des parasitären V-förmigen Weges gegenüber dem gewünschten Signal des W-förmigen Weges erreichen. Bezüglich weiterer Einzelheiten sei auf die Beschreibung dieser Anmeldung hingewiesen.

Aufgabe der vorliegenden Erfindung ist es, eine Verbesserung eines Durchflußmesser der obengenannten älteren Patentanmeldung anzugeben, mit der zusätzlich das Verhältnis des Nutzsignals (des W-förmigen Weges) zum parasitären Signal (des V-förmigen Weges) weiter verbessert wird.

Diese Aufgabe wird mit den Maßnahmen des Patentanspruches 1 gelöst.

Wie aus dem der beigefügten Figur 2 zu sehen ist, erfolgt bei den Durchflußmessern der obengenannten Patentanmeldung die Reflexion der Ultraschallstrahlung am Ort 501 und am Ort 502, sowie auch am Ort 503 an einer ebenen Fläche. Der Öffnungswinkel der vom Sendewandler 11 ausgesandten Strahlung (das gleiche gilt für den Wandler 12, wenn dieser als Sendewandler betrieben wird) hat ein endliches Winkelmaß von z.B. d = 15°. D.h., daß von dem Sendewandler divergierende Ultraschallstrahlung ausgeht, wobei der Divergenzwinkel bekanntermaßen abhängig ist von der Ultraschall-Wellenlänge und den geometrischen Abmessungen und auch Einzelheiten der Ausführungsform des Wandlers. Entsprechenden Divergenzwinkel hat auch die Empfangscharakteristik eines solchen Ultraschallwandlers in seiner Betriebsphase als Empfangswandler.

Mit der Erfindung ist durch zusätzliche Fokussierung an wenigstens einer der Reflexionsstellen 501 bis 503 bewirkt, daß die zunehmende Aufspreizung des Ultraschallstrahls 21 in Grenzen gehalten bzw. rückgeführt wird.

Durch Wahl der Krümmung der Reflexionsflächen 501 bis 503 läßt sich auch in Richtung B eine Fokussierung erzielen. Die Figur 2 zeigt in ihrer Schnittdarstellung die Krümmung $r_H$, mit der eine Ultraschall-Bündelung in der Ebene der Darstellung der Fig. 2 zu erzielen ist. Die aus der Fig. 1 ersichtliche Krümmung $r_B$ dient dazu, eine Bündelung der den Strahlweg 21 enthaltenden, zur Ebene der Darstellung der Fig. 2 senkrechten Ebene (deren Projektion die Querschnittsebene der Fig. 1 ist).

Für den V-förmigen parasitären Ultraschallweg 22 sieht man sinngemäß keine solche erfindungsgemäße Maßnahme vor. Durch eine leichte Wandkrümmung an der Stelle 504, und zwar durch eine solche Wandkrümmung, die Zerstreuung des reflektierten Ultraschallstrahls 22 bewirkt, kann jedoch zusätzlich die Relation des Nutzsignals gegenüber dem parasitären Signal vergrößert werden. Die oben beschriebenen fokussierenden Krümmungen 501 bis 503 und die defokussierende Krümmung 504 in der Innenwand des Meßrohres sind im Verhältnis zu den Abmessungen H und B so klein, daß sie auf die Strömung des Gases bzw. der Flüssigkeit in dem Meßrohr keinen störenden Einfluß haben. Entsprechendes gilt für eine Bemessung der defokussierenden Krümmung $r_D$ am Ort 504 der Reflexion der parasitären Strahlung 22, wobei - da es sich in diesem Falle um Defokussierung handelt - kein besonderer Aufwand für eine optimale Bemessung erforderlich ist. Optimal für die Bemessung der Krümmungen $r_H$ und $r_B$ für die Reflexionsflächen 501 bis 503 ist, wenn minimale Strahldivergenz am Ort des Empfangs des Ultraschall 21 des W-förmigen Weges erzielt ist. Dabei gilt, daß die optimalen fokussierenden Krümmungen sowohl für den Hinweg als für den Rückweg gelten, d.h. für den Fall, daß der Wandler 11 der Sendewandler und der Wandler 12 der Empfangswandler ist und umgekehrt der Wandler 12 der Sendewandler und der Wandler 11 der Empfangswandler ist.

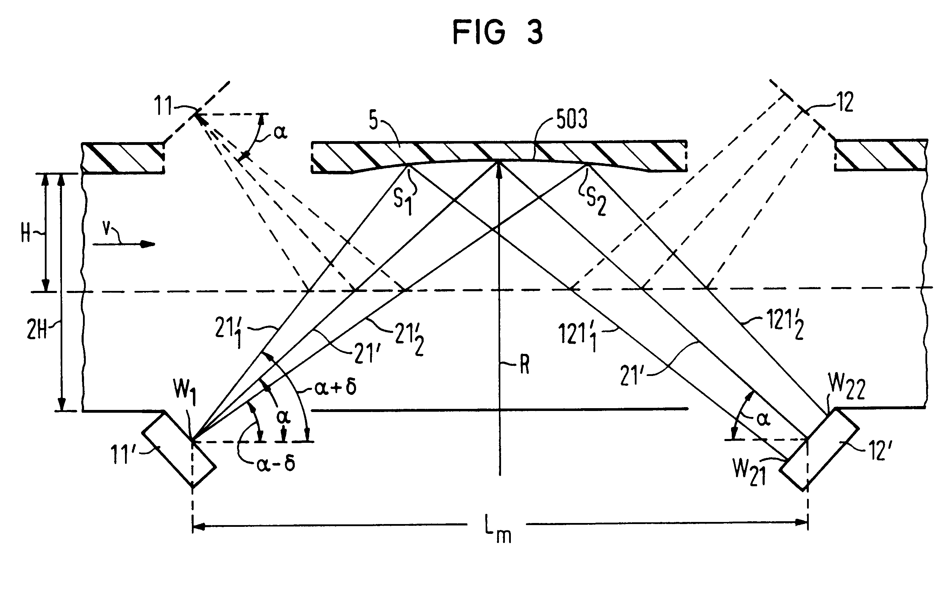

Das nachfolgende mit der Fig. 3 Berechnungsbeispiel bezieht sich auf eine einzige vorgesehene fokussierende Reflexion (auf die Reflexion 503), wobei die übrigen Reflexionen des W-förmigen Weges 21 der Fig. 1 außer Betracht gelassen sind. Bei diesem Beispiel ist der W-förmige Weg für die Berechnung - und wie in der Fig. 3 dargestellt -, zu einem Ultraschallweg mit nur einer Reflexion "aufgefaltet" betrachtet. Gestrichelt ist in Fig. 3 der eigentliche W-förmige Weg der Fig. 1 angedeutet.

Unabhängig von den in der Beschreibungseinleitung angegebenen bzw. abgeleiteten Gleichungen 1 bis 20 gelten die weiteren zum W-förmigen Weg angegebenen Gleichung 21 bis 24.

Wie obenangegeben wird mit dem Winkel Alpha ($=a$) die Ultraschallstrahlung des ungefalteten W-förmigen Weges hier in Fig. 3 als Strahlungsweg 21' in das Meßrohr 1 mit den Seitenwänden 2 bis 5 und der Höhe 2H und der Breite B eingestrahlt. Entsprechend trifft die Ultraschallstrahlung auf den als Empfangswandler betriebenen Ultraschallwandler 12' mit diesem Winkel a auf.

Es gilt:

$$\tan a = \frac{4H + 2r \cos a}{L_m} \qquad\qquad (21)$$

worin r wiederum der Radius des Wandlers, H die betreffende Abmessung des Meßrohres 1 und $L_m$ der Mittenabstand der Wandler gemäß Fig. 2 ist.

7

Die Länge $L_s$ beträgt

$$L_S = \frac{(N+1)\ H}{\sin\ a} = \frac{4H}{\sin\ a} \qquad (22)$$

Die Länge der Schallwege innerhalb der beiden Wandlertaschen beträgt

$L_w = r \cot a$     (23)

so daß sich als Gesamt-Schallweg $L_{ges}$ ergibt:

$L_{ges} = L_s + 2L_w$     (24)

wobei dies der gesamte Schallweg von der schallabstrahlenden Fläche des Wandlers 11' bis zur schallaufnehmenden Fläche des Wandlers 12' ist, nämlich derjenige Schallweg, der für die Fokussierung zwischen schallaussendender Fläche und schallempfangender Fläche in Betracht zu ziehen ist.

Wie bereits oben erwähnt, gibt die Fig. 3 die Erläuterung für die Berechnung einer fokussierenden Reflexion des Nutzsignals wieder. Mit 21' ist der Mittelstrahl des Strahlenbündels angegeben und mit $21_1$' und $21_2$' sind angenommene Randstrahlen kenntlich gemacht.

In der Fig. 3 ist die flache Krümmung mit dem Radius R angegeben, wobei es sich bei diesem Beispiel um einen sphärischen oder zylindrischen (Hohl-)Spiegel handeln soll. Aus der Fig. 3 ist die Fokussierungswirkung zu erkennen.

Mit der erfindungsgemäßen Maßnahme gelangt auf den jeweils als Empfangswandler betriebenen Ultraschallwandler ein höherer Anteil der akustische Leistung, die vom jeweils als Sendewandler betriebenen Wandler ausgesandt worden ist. Da für den parasitären Weg (s. Fig. 2) keine solche Fokussierung vorgesehen ist, kommt dieser Fokussierungsgewinn allein dem Nutzsignal und dem verbesserten Nutzsignal/Störsignal-Verhältnis zugute. Entsprechend der hier der Einfachheit halber am "Beispiel" wiedergegebenen Lehre der Erfindung kann sinngemäß für den W-förmigen Weg des Nutzsignals die Fokussierungmaßnahme auf die dort dann drei Reflexionen im Inneren des Meßrohres 1 aufgeteilt werden. Welche Wahl optimal ist, hängt vom Einzelfall ab. Nur eine einzige fokussierende Reflexion vorzusehen, ist z. B. technisch weniger aufwendig. Andererseits wird bei mehrfacher Fokussierung verhindert, daß sich das Bündel der Ultraschallstrahlung stärker aufweitet, was z. B. bei geringer Größe der Breite B wiederum von Vorteil ist.

Mit einem Hohlspiegel-Reflektor 503 und bei einer solchen Bemessung, bei der der Sendewandler im Brennpunkt dieses Hohlspiegels liegt, ist die Auftrefffläche auf dem Empfangswandler zu beschreiben als

$F_f = 2bL_{ges}\tan(\text{Delta}/2)$     (25)

Bei geringer Breite B genügt es im allgemeinen, anstelle eines sphärischen Spiegels eine reflektierende Zylindermantelfläche mit der Rotationsachse des Zylinders senkrecht zur Ebene der Darstellung der Fig. 3 (bzw. der Fig. 2) vorzusehen.

Bei der "W"-Anordnung werden nicht, wie hier zunächst idealisiert dargestellt, paraxiale Strahlen reflektiert, sondern im Winkel a auf die Spiegelebene fallende (s. Fig. 3) Strahlen.

Damit bleibt das homozentrische Strahlenbündel nach der Reflexion nicht mehr homozentrisch, es entsteht kein klar definiertes bild bzw. kein paralleles Strahlenbündel. Bedingt durch die starke Abweichung von paraxialen Verhältnissen und durch die Abbildungsfehler des betreffenden Reflektors liegt der Sendewandler nicht in der theoretischen Brennebene, sondern befindet sich in eiem kürzeren Abstand zur Reflektorebene. Es muß darauf geachtet werden, daß das Strahlenbündel unter allen Strömungsverhältnissen, insbesondere unter Berücksichtigung der auftretenden Strahlungsverwehung, auf den Empfangswandler trifft.

Weitere, allerdings nur in besonderen Fällen erforderliche Hilfestellung ist den nachfolgenden Ausführungen zu entnehmen.

Es sei wieder auf Fig. 3 Bezug genommen, und für den "dargestellten", tatsächlich W-förmigen Strahlweg des Nutzsignals, ist die Höhe H' doppelt so groß wie die tatsächliche Höhe H des Meßrohres angegeben. Bild 2 zeigt eine praktische Anordnung der Wandler in einem W-Meßrohr, wobei die erste und die dritte Reflexion "aufgefaltet" wurden, da diese für die folgenden Betrachtungen keine Rolle spielen.

Dazu muß allerdings die Höhe H verdoppelt werden. Der sendende Wandler 11' wird als Punktquelle dargestellt. Ein kartesisches Koordinatensystem wird eingeführt mit Ursprung am Scheitelpunkt des konkaven Reflektors (d. h. die y-Achse ist die Spiegelachse des Systems und die x-Achse geht durch den Scheitelpunkt des Reflektors). Es wird im folgenden ein empirisches Verfahren zur Bestimmung eines günstigen Spiegelradius beschrieben. Dazu wird der Sendewandler als Punktquelle (homozentrisches Strahlenbündel) angesehen. Der Divergenzwinkel sei Delta ($=d$). Da sich, wie oben erwähnt, nach der Spiegelung keine stigmatische Abbildung mehr ergibt, bzw. sich kein paralleles Strahlenbündel mehr erreichen läßt, soll erreicht werden, daß alle Strahlen innerhalb des Divergenzwinkels den Empfangswandler treffen. Dazu soll der jeweils unter (a $+/-$ d/2) vorgesehene Strahl jeweils den Eckpunkt des Empfangswandlers treffen (s. Bild 3).

Es sind bekannt die Koordinaten der sendenden Punktquelle $W_1(x_1; y_1)$ als Mitte des Sendewandlers 11, sowie die Eckpunkte des Empfangswandlers 12' $W_{21}(x_{21}; y_{21})$ für den oberen Eckpunkt und $W_{22}(x_{22}; y_{22})$ für den unteren Eckpunkt. Es wird der Einstrahlwinkel a mittels der Geraden 21' bestimmt. Ausgehend vom Sendewandler werden die Geraden $21_1$' und $21_2$' bestimmt, die unter dem Winkel (a + d/2) und (a - d/2) auftreten.

Es sei näherungsweise die Spiegelkrümmung vernachlässigbar, sodaß die Schnittpunkte $S_1$ und $S_2$ der x-Achse mit $21_1$' und $21_2$' bestimmt werden können. Es werden die Geradengleichungen $121_1$' und $121_2$' mit Hilfe von $S_1$ und $W_{21}$ bzw. $S_2$ und $W_{22}$ aufgestellt. Zu bestimmen ist jetzt noch der Schnittpunkt der Winkelhalbierenden von $21_1$' und $121_1$' bzw. von $21_2$' und $121_2$' mit der y-Achse (d. h. x = 0), der dann den Radius des Hohlspiegels darstellt. Aus o. g. Gründen werden sich zwei geringfügig verschiedene Radien ergeben. Die Brennweite ergibt sich dann zu f = r/2. Außerdem ist die erhaltene Lösung wegen der gemachten Annahme noch gewissen Fehlern unterworfen, sodaß noch in der Praxis eine Feinabstimmung an der aktuellen Übertragungsstrecke erforderlich ist.

Folgendes Beispiel bezieht sich auf eine erfindungsgemäße Verbesserung eines früheren Ausführungsbeispiels. Bei diesen war die Breite B = 6mm, die Höhe H = 30 mm, der Einstrahlwinkel a = 38°, der Abstand $L_m$ = 165 mm, und der Divergenzwinkel d = 15°. Der jetzt vorgesehene Hohlspiegel weist gegenüber der Höhe H eine Tiefe von 3 mm auf, dort sollen auch die Reflexionspunkte liegen. Der Wandlerradius beträgt r = 7 mm.

Es ergibt sich der Wert $L_m$ = 179,12 mm. Es ergeben sich zwei verschiedene Hohlspiegelradien $R_1$ = 220 mm und $R_2$ = 211 mm. Durch die Spiegelvertiefung ergibt sich eine Sehnenlänge S am Übergang zum eigentlichen Meßkanal von ca. 72 mm. Die Nachprüfung durch ein Experiment zeigte, daß man mit einem Radius von ca. 220 mm den optimalen Signalgewinn erreicht. Der Signalgewinn beträgt dabei ca. 6 dB.

Prinzipiell könnte auch an allen drei Reflexionsorten fokussierende Elemente vorgesehen werden. Jedoch sind die entsprechenden Hohlspiegelradii anzupassen. Am Reflexionsort des parasitären "V"-Signals könnte man eine defokussierende Maßnahme zur Verbesserung des Störabstandes zum Nutzsignal vorsehen (Konvexreflektor). Die beschriebene fokussierende Maßnahme kann auch für Meßrohre angewandt werden, die im Gegensatz zu der "W"-Schallführung eine Schallführung mit einer Reflexion ("V"-Meßrohr) aufweisen.

Im obigen Text wurde lediglich ein sphärischer Reflektor erwähnt. Ein parabolischer Reflektor wurde noch bessere Abbildungseigenschaften liefern.

**Patentansprüche**

1. Ultraschall-Durchflußmesser mit einem von Gas oder Flüssigkeit zu durchströmenden Meßrohr (1) und mit Ultraschall-Sende-/ Empfangswandlern (F12), die für einen in dem Meßrohr (1) verlaufenden "W"-förmigen Ultraschallweg (21') mit im Meßrohr (1) vorgesehenen, mehrfachen Reflexionen plaziert in einem gegebenen Abstand voneinander an ein und derselben Seitenwand (5) des Meßrohrs (1) mit viereckigem Querschnitt angebracht sind, **gekennzeichnet dadurch,** daß zur Verbesserung des Nutzsignal/Störsignalverhältnisses, wobei das Störsignal auf einem bekanntermaßen im Meßrohr (1) auftretenden parasitären "V"-förmigem Ultraschallweg beruht,
an wenigstens einer der Reflexionsstellen (501, 502, 503) des "W"-förmigen Ultraschallweges (21) eine fokussierende Krümmung des die Reflexion bewirkenden Flächenanteils der Innenoberfläche der Meßrohr-Wandung (4, 5) vorliegt,
wobei dieser Flächenanteil auf den Öffnungswinkel der Ultraschallstrahlung $+/-$ Delta abgestimmt bemessen ist und die Fokussierung der bündelförmigen Ultraschallstrahlung (21) am Ort des Empfangswandlers (12' in Figur 3) an dessen Empfangsoberfläche erfolgt.

2. Durchflußmesser nach Anspruch 1, **gekennzeichnet dadurch,** daß mehrere der Reflexionsstellen (501, 502, 503) die Ultraschallstrahlung (21) des "W"-förmigen Weges der Nutzsignalstrahlung zwischen Sendewandler (11 bzw. 12) und Empfangswandler (12 bzw. 11) zusammengenommen diese Fokussierung bewirken.

3. Durchflußmesser nach Anspruch 1 oder 2, **gekennzeichnet dadurch,** daß für den "V"-förmigen Ultraschallweg (22) parasitärer Ultraschallstrahlung zwischen Sendewandler und Empfangswandler an der im Meßrohr (1) liegenden Reflexionsstelle für diese Strahlung eine defokussierend wirkende Formgebung (504) der Oberfläche der Innenwand des Meßrohres vorgesehen ist.

4. Durchflußmesser nach einem der Ansprüche 1 bis 3, **gekennzeichnet dadurch,** daß eine die Nutzsignalstrahlung fokussierende sphärische Formgebung der wenigstens einen Reflexionsstelle (501, 502, 503) des Ultraschallweges (21) der Nutzsignalstrahlung vorliegt.

5. Durchflußmesser nach einem der Ansprüche 1 bis 3, **gekennzeichnet dadurch,** daß eine die Nutzsignalstrahlung fokussierende zylindrische Formgebung der wenigstens einen Reflexionsstelle (501, 502, 503) des Ultraschallweges (21) der Nutzsignalstrahlung vorliegt.

6. Durchflußmesser nach einem der Ansprüche 1 bis 3, **gekennzeichnet dadurch,** daß eine die Nutzsignalstrahlung fokussierende parabolische Formgebung der wenigstens einen Reflexionsstelle (501, 502, 503) des Ultraschallweges (21) der Nutzsignalstrahlung vorliegt.

7. Durchflußmesser nach einem der Ansprüche 1 bis 3, **gekennzeichnet dadurch,** daß eine Formgebung mit, bezogen auf die Richtungen der Rohrabmessungen (L und B) unterschiedlichen Fokussier-Krümmungen der wenigstens einen Reflexionsstelle (501, 502, 503) des Ultraschallweges (21) der Nutzsignalstrahlung vorliegt.

**Claims**

1. Ultrasonic flowmeter having a measurement tube (1) through which gas or liquid is to flow and having ultrasonic transmission/reception transducers (F12), which, for a "W"-shaped ultrasonic path (21') running in the measurement tube (1), with multiple reflections provided in the measurement tube (1), are fitted, placed at a given distance from one another on one and the same sidewall (5) of the measurement tube (1) of rectangular cross-section, characterized in that, to improve the useful signal/extraneous signal ratio, the extraneous signal being based on a parasitic "V"-shaped ultrasonic path occurring as is known in the measurement tube (1), at at least one of the reflection points (501, 502, 503) of the "W"-shaped ultrasonic path (21), focusing curvature of the surface component, causing the reflection, of the internal surface of the measurement tube wall (4, 5) is present,
this surface component being dimensioned to be matched to the aperture angle of the ultrasonic radiation +/- delta, and the focusing of the beam-shaped ultrasonic radiation (21) occurring at the location of the reception transducer (12' in Figure 3) at the reception surface thereof.

2. Flowmeter according to Claim 1, characterized in that a plurality of the reflection points (501, 502, 503) effect this focusing of the ultrasonic radiation (21) of the "W"-shaped path of the useful signal radiation between the transmission transducer (11 or 12) and reception transducer (12 or 11) taken together.

3. Flowmeter according to Claim 1 or 2, characterized in that, for the "V"-shaped ultrasonic path (22) of parasitic ultrasonic radiation between the transmission transducer and reception transducer at the reflection point, situated in the measurement tube (1), for this radiation, defocusing profiling (504) of the surface of the internal wall of the measurement tube is provided.

4. Flowmeter according to one of Claims 1 to 3, characterized in that spherical profiling, focusing the useful signal radiation, of the at least one reflection point (501, 502, 503) of the ultrasonic path (21) of the useful signal radiation is present.

5. Flowmeter according to one of Claims 1 to 3, characterized in that cylindrical profiling, focusing the useful signal radiation, of the at least one reflection point (501, 502, 503) of the ultrasonic path (21) of the useful signal radiation is present.

6. Flowmeter according to one of Claims 1 to 3, characterized in that parabolic profiling, focusing the useful signal radiation, of the at least one reflection point (501, 502, 503) of the ultrasonic path (21) of the useful signal radiation is present.

7. Flowmeter according to one of Claims 1 to 3, characterized in that profiling with, related to the directions of the tube dimensions (L and B), differing focusing curvatures of the at least one reflection point (501, 502, 503) of the ultrasonic path (21) of the useful signal radiation is present.

**Revendications**

1. Débitmètre à ultrasons comportant un tube de mesure (1) dans lequel peut passer du gaz ou du liquide, et des transducteurs d'émission/réception d'ultrasons (F12), qui, pour un trajet (21') des ultrasons en forme de "W" , qui s'étend dans le tube de mesure (1), avec des réflexions multiples prévues dans le tube de mesure (1), sont disposés à une distance mutuelle donnée sur une seule et même paroi latérale (5) du tube de mesure (1) de section transversale carrée, caractérisé par le fait que, pour améliorer le rapport signal utile/signal parasite, le signal parasite étant basé sur un trajet parasite en forme de "V" des ultrasons, qui, comme il est connu, apparaît dans le tube de mesure (1), un cintrage focalisateur de la partie, qui produit une réflexion, de la surface intérieure de la paroi (4, 5) du tube de mesure est prévu en au moins l'un des points de réflexion (501, 502, 503) du trajet (21) en forme de "W" des ultrasons, cette partie de surface étant dimensionnée de manière réglée sur l'angle d'ouverture +/- delta du rayonnement ultrasonore, et la focalisation du rayonnement ultrasonore en forme de faisceau (21) s'effectuant à l'endroit du transducteur de réception (12' sur la figure 3), sur la surface de réception de ce transducteur.

2. Débitmètre suivant la revendication 1, caractérisé par le fait que plusieurs des points de réflexion (501, 502, 503) réalisent globalement cette focalisation du rayonnement ultrasonore (21) du trajet en forme de "W" du rayonnement du signal utile entre le transducteur d'émission (11 ou 12) et le transducteur de réception (12 ou 11).

3. Débitmère suivant la revendication 1 ou 2, caractérisé par le fait qu'il est prévu une forme (504), défocalisatrice de la surface de la paroi intérieure du tube de mesure pour le trajet (22) en forme de "V" des ultrasons (22) du rayonnement ultrasonore parasite, entre le transducteur d'émission et le transducteur de réception aux points de réflexion prévus dans le tube de mesure (1) pour ce rayonnement.

4. Débitmètre suivant l'une des revendications 1 à 3, caractérisé par le fait qu'il est prévu une forme sphérique et focalisant le rayonnement du signal utile d'au moins un point de réflexion (501, 502, 503) du trajet (21) des ultrasons du rayonnement du signal utile.

5. Débitmètre suivant l'une des revendications 1 à 3, caractérisé par le fait qu'il est prévu une forme cylindrique et focalisant le rayonnement du signal utile d'au moins un point de réflexion (501, 502, 503) du trajet (21) des ultrasons du rayonnement du signal utile.

6. Débitmètre suivant l'une des revendications 1 à 3, caractérisé par le fait qu'il est prévu une forme parabolique et focalisant le rayonnement du signal utile d'au moins un point de réflexion (501, 502, 503) du trajet (21) des ultrasons du rayonnement du signal utile.

7. Débitmètre suivant l'une des revendications 1 à 3, caractérisé par le fait qu'il est prévu une forme d'au moins un point de réflexion (501, 502, 503) du trajet (21) des ultrasons du rayonnement du signal utile ayant des courbures de focalisation, qui, rapportées aux directions des dimensions (L et B) du tube, sont différentes.

# FIG 2

# FIG 1

EP 0 521 855 B1

FIG 3